# DEMANDE DE BREVET EUROPEEN

(11) **EP 3 316 602 A1**
(43) Date de publication de la demande: **02.05.2018**
(21) Numéro de dépôt: 17198211.9
(22) Date de dépôt: 25.10.2017
(51) Int. Cl.: H04W 4/08, A47G 29/12, H04W 4/00

(54) **DISPOSITIF D'AFFICHAGE, BOITE AUX LETTRES ET PORTE PALIERE ASSOCIEES**

(30) Priorité: 25.10.2016 FR 1660364
(71) Demandeur: WYN, 01700 Neyron (FR)
(72) Inventeur: de VENDIN, Philippe Empis, 69570 DARDILLY (FR)
(74) Mandataire: Cabinet Laurent & Charras

(57) **Abrégé**

L'invention concerne un dispositif d'affichage (10) pour boîte aux lettres (20) comportant :
- un afficheur numérique (11) destiné à être fixé sur une façade (21) d'une boîte aux lettres (20) et configuré pour afficher des informations stockées dans une mémoire (13),
- un organe de gestion (12) connecté à ladite mémoire (13) et apte à modifier lesdites informations,
- un module de communication sans fil (14) connecté audit organe de gestion (12) de sorte qu'un appareil distant puisse communiquer avec ledit organe de gestion (12) et modifier lesdites informations, et
- un circuit de gestion d'énergie (15) à commande manuelle (16) connecté audit module de communication sans fil (14) et configuré pour établir une alimentation électrique dudit module de communication sans fil (14) pendant une durée prédéterminée sous l'effet de ladite commande manuelle (16).

## Description

### DOMAINE TECHNIQUE

La présente invention concerne le domaine technique des dispositifs d'affichage destinés à identifier les occupants d'un bien immobilier. L'invention trouve une application particulièrement avantageuse pour équiper une boîte aux lettres et/ou une porte palière d'un immeuble.

### ART ANTERIEUR

Une boîte aux lettres est classiquement pourvue d'une étiquette indiquant le nom et le prénom du ou des occupants du logement associé à la boîte aux lettres. De façon générale, ces étiquettes sont de plus en plus homogénéisées au niveau d'un immeuble, d'une rue ou d'une agglomération. Ainsi, un occupant ne peut plus modifier lui-même l'étiquette de sa boîte aux lettres au risque de dégrader l'uniformité. Pour ce faire, un technicien est mandaté pour intervenir sur le site et déposer une étiquette conforme aux normes structurelles imposées par la ville, la collectivité ou le gestionnaire d'un immeuble. Par exemple, toutes les étiquettes d'un immeuble peuvent correspondre à des plaques de cuivre avec des dimensions et une police normalisées.

Il s'ensuit qu'un nouvel occupant doit généralement attendre entre 10 et 15 jours pour que sa boîte aux lettres soit équipée d'une nouvelle étiquette, temps nécessaire pour la réalisation de l'étiquette avec les informations de l'occupant et pour le déplacement d'un technicien. Dans cet intervalle, le nouvel occupant ne peut plus recevoir de correspondance. En outre, le coût de fabrication de l'étiquette et le coût d'intervention du technicien ne sont pas négligeables lors de l'emménagement d'un nouvel occupant, notamment dans le cas d'un emménagement pour une courte durée.

Le problème technique de l'invention est donc de fournir une étiquette respectant un format standard et dont les informations sont facilement modifiables lors de l'emménagement d'un nouvel occupant.

### EXPOSE DE L'INVENTION

La présente invention vise à répondre à ce problème technique au moyen d'une étiquette numérique réalisée par un afficheur numérique présentant les informations du ou des occupants du bien immobilier, généralement le nom et le prénom. La modification des informations affichées par l'afficheur numérique est possible à distance au moyen d'un module de communication sans fil. Afin de permettre l'intégration de l'afficheur et du module de communication sans fil dans une boîte aux lettres, ces éléments sont alimentés électriquement par une batterie.

Cependant, les inventeurs ont constatés avec surprise que l'intégration de ces éléments ne permettait pas de répondre correctement aux contraintes des boîtes aux lettres car la consommation d'un tel dispositif était trop importante. Il s'ensuit qu'il était nécessaire de remplacer la batterie tous les 4 à 5 mois. Pour remédier à ce nouveau problème, les inventeurs ont trouvé un nouveau circuit d'alimentation permettant d'alimenter le module de communication sans fil uniquement lorsque l'occupant souhaite modifier les informations affichées par l'afficheur numérique. Pour ce faire, le circuit d'alimentation comporte une commande manuelle pour établir le fonctionnement du module de communication sans fil sur une durée prédéterminée.

A cet effet, selon un premier aspect, l'invention concerne un dispositif d'affichage pour boîte aux lettres comportant :
- un afficheur numérique destiné à être fixé sur une façade d'une boîte aux lettres et configuré pour afficher des informations stockées dans une mémoire,
- un organe de gestion connecté à ladite mémoire et apte à modifier lesdites informations,
- un module de communication sans fil connecté audit organe de gestion de sorte qu'un appareil distant puisse communiquer avec ledit organe de gestion et modifier lesdites informations, et
- un circuit de gestion d'énergie à commande manuelle connecté audit module de communication sans fil et configuré pour établir une alimentation électrique dudit module de communication sans fil pendant une durée prédéterminée sous l'effet de ladite commande manuelle.

L'invention permet ainsi de fournir un affichage standardisé pour des boîtes aux lettres avec des moyens de modification sans fil des informations affichées sur l'étiquette. Ainsi, il n'est plus nécessaire de procéder au remplacement d'une ancienne étiquette lors d'un changement d'occupant d'un bien immobilier.

Par exemple, lors de la remise des clés à un nouvel occupant, le nouvel occupant peut activer la commande manuelle de sorte à activer le module de communication sans fil et ensuite modifier les informations affichées sur l'étiquette en indiquant son nom et son prénom. Pour ce faire, le nouvel occupant peut utiliser son téléphone portable ou encore un ordinateur avec une connexion internet si le module de communication sans fil est apte à connecter l'organe de gestion sur internet. Le nouvel occupant peut également contacter une plateforme téléphonique avec des opérateurs aptes à modifier à distance les informations pour le nouvel occupant.

La communication sans fil peut être effectuée avec tous les protocoles connus, par exemple le WiFi, le NFC, le Bluetooth... Selon un mode de réalisation, ledit module de communication sans fil utilise le protocole « ZigBee ». Ce mode de réalisation est particulièrement efficace pour communiquer avec un grand nombre d'appareils tels que les téléphones portables, les routeurs, les tablettes numériques...

Pour garantir l'authenticité des données affichées par l'afficheur numérique, les communications entre le nouvel occupant et le dispositif d'affichage peuvent être cryptées. Pour ce faire, ledit module de communication sans fil ou ledit organe de gestion intègre des moyens de décryptage des données reçues. Le cryptage peut être connu par l'interface de modification (application pour téléphone, page internet...) à destination du nouvel occupant.

Selon un mode de réalisation, ledit organe de gestion est configuré par afficher un identifiant sur ledit afficheur numérique sous l'effet de ladite commande manuelle, un cryptage des communications avec ledit module de communication sans fil étant déterminé en fonction dudit identifiant. Ce mode de réalisation permet d'utiliser un cryptage spécifique pour chaque dispositif d'affichage.

Lorsque le nouvel occupant active la commande manuelle, il peut lire l'identifiant sur l'afficheur et utiliser cet identifiant pour effectuer les modifications durant la durée prédéterminée. Lorsque les nouvelles informations sont reçues, l'affichage de l'identifiant est remplacé par l'affichage des nouvelles informations.

En outre, la problématique de la consommation énergétique est gérée par un circuit de gestion apte à désactiver certaines fonctionnalités dans le fonctionnement normal, c'est-à-dire lorsqu'il n'est pas nécessaire de modifier les informations affichées sur l'afficheur numérique. En désactivant au moins le module de communication sans fil, les inventeurs ont constatés que l'autonomie du dispositif pouvait atteindre 10 ans au lieu de 4 à 5 mois.

Selon un mode de réalisation, ledit circuit de gestion d'énergie est également configuré pour établir une alimentation électrique dudit organe de gestion pendant ladite durée prédéterminée sous l'effet de ladite commande manuelle. Ce mode de réalisation vise à désactiver également l'organe de gestion dans le fonctionnement normal de sorte à réduire encore la consommation.

Selon un mode de réalisation, ledit afficheur numérique est de type papier électronique. Il s'agit d'une technique d'affichage sur support solide ou souple (papier, plastique) qui est modifiable électroniquement et qui imite l'apparence d'une feuille imprimée. La spécificité de ce procédé est que, tout comme le papier classique, il ne nécessite pas d'énergie pour laisser un texte ou une image affiché. Ainsi, un afficheur numérique de type papier électronique propose une qualité de lecteur comparable aux étiquettes classiques des boîtes aux lettres tout en limitant la consommation énergétique du dispositif d'affichage.

Selon un mode de réalisation, ledit dispositif d'affichage intègre également un capteur solaire permettant de convertir l'énergie lumineuse en énergie électrique dans une batterie au sein du dispositif d'affichage. Ce mode de réalisation permet d'améliorer encore la consommation énergétique.

Selon un mode de réalisation, ladite durée prédéterminée est comprise entre 24 et 72 heures. Ce mode de réalisation offre un bon compromis entre le temps nécessaire pour effectuer le changement et l'objectif de limitation de la consommation énergétique.

Selon un second aspect, l'invention concerne une boîte aux lettres comportant une enceinte et au moins une façade permettant d'accéder à ladite enceinte, ladite boîte aux lettres intégrant un dispositif d'affichage selon le premier aspect de l'invention, la façade étant pourvue dudit afficheur numérique et ladite commande manuelle étant disposée à l'intérieur de ladite enceinte.

Ce deuxième aspect de l'invention vise à intégrer le dispositif d'affichage dans une boîte aux lettres. En outre, la sécurité de la mise à jour est améliorée par le positionnement de la commande manuelle dans l'enceinte de sorte que les personnes qui peuvent modifier les informations affichées sur l'afficheur doivent préalablement pouvoir ouvrir la boîte aux lettres.

Selon un troisième aspect, l'invention concerne une porte palière comportant un afficheur numérique et un module de communication sans fil, ladite porte palière étant associée avec au moins une boîte aux lettres selon le second aspect de l'invention de sorte que lorsque ledit module de communication sans fil est activé, le module de communication sans fil de ladite porte palière communique avec ledit module de communication sans fil de ladite boîte aux lettres pour mettre à jour une information sur ledit afficheur de ladite porte palière en accord avec lesdites informations dudit afficheur numérique de ladite boîte aux lettres.

Ce troisième aspect de l'invention vise un système plus complet avec une porte palière pouvant répertorier plusieurs occupants d'un même bien immobilier. Chaque occupant possède alors une boîte aux lettres et lors du changement d'un occupant, il est nécessaire de modifier à la fois les informations affichées au niveau de la porte palière et l'étiquette de la boîte aux lettres. Ce troisième aspect de l'invention permet de réaliser simultanément ces deux changements par l'intermédiaire de l'application, de la page internet ou du service téléphonique.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 4 représentent :
- Figure 1 : une représentation schématique d'un premier mode de réalisation du dispositif d'affichage de l'invention ;
- Figure 2 : une représentation schématique d'un second mode de réalisation du dispositif d'affichage de l'invention ;
- Figure 3 : une représentation schématique d'une boîte aux lettres selon un mode de réalisation de l'invention dans une position fermée ; et
- Figure 4 : une représentation schématique de la boîte aux lettres de la figure 3 dans une position ouverte.

### DESCRIPTION DETAILLEE DE L'INVENTION

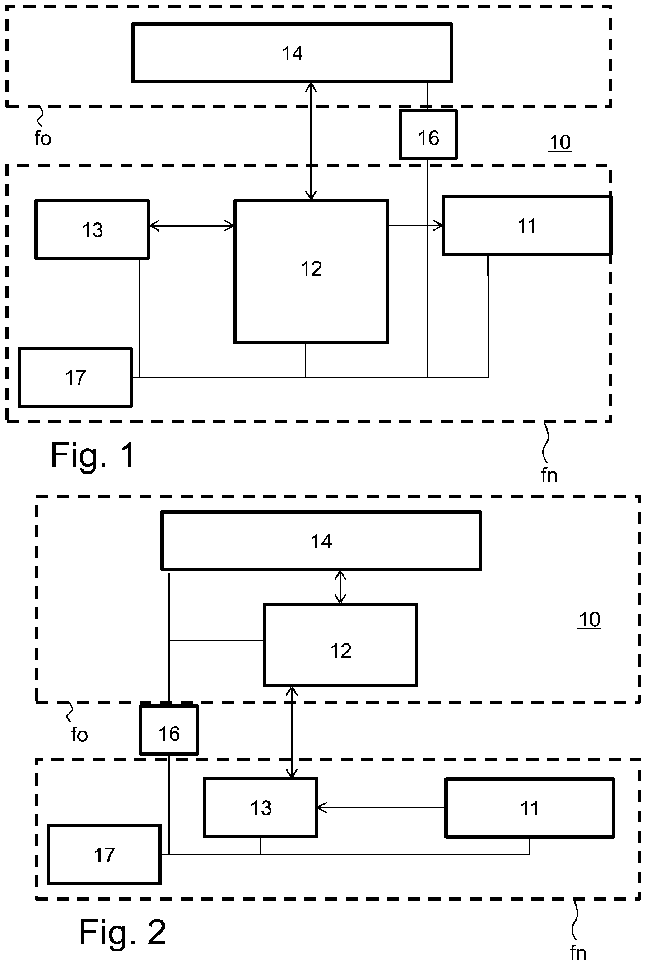

La Figure 1 illustre une architecture d'un dispositif d'affichage **10** pour une boîte aux lettres **20.** Ce dispositif d'affichage **10** comporte un afficheur numérique **11** destiné à remplacer l'étiquette d'une boîte aux lettres classique, une mémoire **13** pour stocker les informations à afficher, un module de communication sans fil **14** et un microcontrôleur **12** pour assurer la mise à jour des informations contenues dans la mémoire **13.**

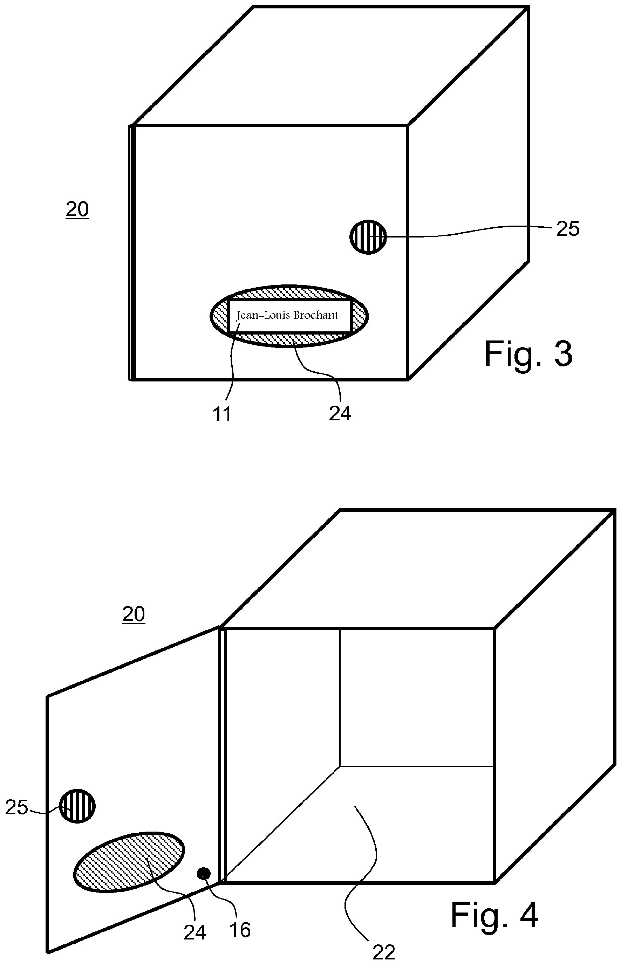

L'afficheur numérique **11** comporte au moins une ligne afin d'afficher le nom et le prénom d'un occupant d'un bien immobilier. En variante, d'autres informations peuvent être affichées tel que l'étage ou le numéro du logement. De préférence, l'afficheur numérique **11** est de type papier électronique avec une luminosité suffisante pour permettre une lecture des informations à une distance de 1 mètre de l'afficheur numérique **11.** Tel qu'illustré sur la figure 3, l'afficheur numérique **11** peut être intégré dans un cadre **24** monté sur une façade **21** d'une boîte aux lettres **20.**

L'afficheur numérique **11** est commandé par le microcontrôleur **12.** Pour connaître les informations à afficher sur l'afficheur numérique **11,** le microcontrôleur **12** interroge la mémoire **13.** La transmission entre le microcontrôleur **12** et l'afficheur numérique **11** peut être réalisée sur 8 bits en utilisant le codage ASCII.

La modification des informations contenues dans la mémoire **13** est mise en oeuvre par le microcontrôleur **12** au moyen d'une commande externe transmise par l'intermédiaire du module de communication sans fil **14.**

Le module de communication sans fil **14** peut se connecter à un périphérique mobile tel qu'un téléphone portable, une tablette tactile ou un ordinateur portable. En outre, le module de communication sans fil **14** peut également se connecter à un routeur afin de transmettre la commande externe par l'intermédiaire d'un réseau. De préférence, le module de communication sans fil **14** correspond à une puce ZigBee fonctionnant sur douze canaux de la bande de fréquence 2.4 GHz. Par exemple, la puissance d'émission est ajustable entre 10 mW et 60 mW et la portée théorique est comprise entre 100 m en intérieur et 1500 m en extérieur. Par exemple, la connexion entre le microcontrôleur **12** et la puce ZigBee est réalisée par une liaison série selon le protocole RS 232.

De préférence, la commande externe est cryptée et le module de communication sans fil **14** ou le microcontrôleur **12** intègre des moyens de décryptage de la commande externe. De préférence, la clé de cryptage est déterminée en fonction d'un identifiant affiché sur l'afficheur numérique **11** lorsque l'occupant d'un bien immobilier souhaite mettre à jour les informations contenues dans la mémoire **13.**

Pour ce faire, l'occupant du bien immobilier possède une commande manuelle **16** configurée pour activer le module de communication sans fil **14.** A cet effet, l'afficheur numérique **11,** le microcontrôleur **12,** la mémoire **13** et le module de communication sans fil **14** sont connecté sur une batterie **17** et la commande manuelle **16** permet d'activer l'alimentation du module de communication sans fil **14** pour une durée prédéterminée. De préférence, la durée prédéterminée est comprise entre 24 et 72 heures, par exemple 48 heures. Ainsi, le dispositif d'affichage **10** comporte deux modes de fonction : le mode de fonctionnement normal **fn** dans lequel l'afficheur numérique **11,** le microcontrôleur **12** et la mémoire **13** sont alimentés ; et un mode de fonctionnement de mise à jour **fo** dans lequel le module de communication sans fil **14** est également alimenté par la batterie **17.**

La commande manuelle **16** peut prendre la forme d'un simple bouton poussoir disposé dans l'enceinte **22** de la boîte aux lettres ou sur la face interne de la façade **21** tel qu'illustré sur la figure 4.

Ainsi, si une personne veut activer le module de communication sans fil **14** pour modifier les informations affichées, il doit préalablement ouvrir la boîte aux lettres **20** et donc posséder la clé de la serrure **25** de la boîte aux lettres. En variante, la commande manuelle **16** peut prendre toutes les formes connues, par exemple une télécommande ou un dispositif d'activation par clé.

Selon un autre mode de réalisation, non représenté, la commande manuelle **16** est disposée en dehors de l'enceinte **22** sur la façade **21** d'une boîte aux lettres. Ainsi, le dispositif d'affichage **10** est intégralement reporté sur la façade **21** sans réaliser un évidement sur la façade **21.** Dans ce mode de réalisation, il n'est plus nécessaire de posséder la clé de la boîte aux lettres pour activer la commande manuelle **16.** De ce fait, la sécurité matérielle, générée pour l'ouverture de la boîte aux lettres, peut être remplacée par une sécurité logicielle. Par exemple, la modification peut être autorisée par un serveur distant. Lorsqu'un utilisateur souhaite modifier une information de la mémoire **13,** il active la commande manuelle **16** et il se connecte sans fil avec le microcontrôleur **12.** Sur l'application de son téléphone ou la page internet, l'utilisateur est invité à indiquer les informations à modifier dans la mémoire **13** (nom et prénom par exemple) ainsi qu'une information de vérification des droits de modification, par exemple son numéro de téléphone ou son adresse de messagerie. Le serveur génère ainsi un code de sécurité de sorte à vérifier que l'utilisateur possède la maîtrise de son téléphone ou son adresse de messagerie. Ainsi, le code de sécurité est transmis à l'utilisateur afin qu'il puisse effectivement modifier la mémoire **13** par l'intermédiaire du microcontrôleur **12** en renseignant le code de sécurité.

En variante, tel qu'illustré sur la figure 2, l'afficheur numérique **11** intègre des composants évolués de sorte qu'il est capable de lire directement la mémoire **13** sans utiliser un microcontrôleur **12.**

Ainsi, le microcontrôleur **12** est utilisé uniquement lors de la mise à jour des informations contenues dans la mémoire **13** et il peut être désactivé en même temps que le module de communication sans fil **14.**

Selon une autre variante non représentée, le dispositif d'affichage **10** peut comporter deux microcontrôleurs **12,** un premier microcontrôleur pour gérer la communication sans fil et un second microcontrôleur **12** pour gérer la transmission des informations entre la mémoire **13** et l'afficheur numérique **11.**

En variante, le ou les microcontrôleur **12** peuvent correspondre à des microprocesseur, des ASIC , des FPGA ou tout autre organe de gestion.

En variante, le cadre **24** destiné à porter l'afficheur numérique **11** peut comporter un capteur solaire de sorte à recharger la batterie **17** sous l'effet du rayonnement solaire.

L'invention permet ainsi de modifier facilement les informations d'une boîte aux lettres **20** tout en limitant la maintenance, c'est-à-dire les instants pour lesquels il est nécessaire de remplacer la batterie **17.** En outre, l'invention peut être appliquée à un immeuble présentant une porte palière avec un afficheur numérique.

Pour ce faire, la porte palière intègre un second module de communication sans fil apte à détecter l'activation du module de communication sans fil **14** d'une boîte aux lettres **20.** Ainsi, lorsqu'un occupant modifie les informations affichées sur sa boîte aux lettres **20,** la porte palière peut en être informée par le microcontrôleur **12** afin d'effectuer des modifications similaires.

## Revendications

1. Dispositif d'affichage (10) pour boîte aux lettres (20), ***caractérisé en ce qu***'il comporte :
- un afficheur numérique (11) destiné à être fixé sur une façade (21) d'une boîte aux lettres (20) et configuré pour afficher des informations stockées dans une mémoire (13),
- un organe de gestion (12) connecté à ladite mémoire (13) et apte à modifier lesdites informations,
- un module de communication sans fil (14) connecté audit organe de gestion (12) de sorte qu'un appareil distant puisse communiquer avec ledit organe de gestion (12) et modifier lesdites informations, et
- un circuit de gestion d'énergie (15) à commande manuelle (16) connecté audit module de communication sans fil (14) et configuré pour établir une alimentation électrique dudit module de communication sans fil (14) pendant une durée prédéterminée sous l'effet de ladite commande manuelle (16).

2. Dispositif d'affichage selon la revendication 1, ***dans lequel*** ledit module de communication sans fil (14) utilise le protocole « ZigBee ».

3. Dispositif d'affichage selon la revendication 1 ou 2, ***dans lequel*** ledit module de communication sans fil (14) ou ledit organe de gestion (12) intègre des moyens de décryptage des données reçues.

4. Dispositif d'affichage selon la revendication 3, ***dans lequel*** ledit organe de gestion (12) est configuré par afficher un identifiant sur ledit afficheur numérique (11) sous l'effet de ladite commande manuelle (16), un cryptage des communications avec ledit module de communication sans fil (14) étant déterminé en fonction dudit identifiant.

5. Dispositif d'affichage selon l'une des revendications 1 à 4, ***dans lequel*** ledit circuit de gestion d'énergie (15) est également configuré pour établir une alimentation électrique dudit organe de gestion (12) pendant ladite durée prédéterminée sous l'effet de ladite commande manuelle (16).

6. Dispositif d'affichage selon l'une des revendications 1 à 5, ***dans lequel*** ledit afficheur numérique (11) est de type papier électronique.

7. Dispositif d'affichage selon l'une des revendications 1 à 6, ***dans lequel*** ledit dispositif d'affichage (10) intègre également un capteur solaire permettant de convertir l'énergie lumineuse en énergie électrique dans une batterie (17) au sein dudit dispositif d'affichage (10).

8. Dispositif d'affichage selon l'une des revendications 1 à 7, ***dans lequel*** ladite durée prédéterminée est comprise entre 24 et 72 heures.

9. Boîte aux lettres (20) comportant une enceinte (22) et au moins une façade (21) permettant d'accéder à ladite enceinte (22), ladite boîte aux lettres (20) intégrant un dispositif d'affichage (10) selon l'une des revendications 1 à 8, ladite façade (21) étant pourvue dudit afficheur numérique (11) et ladite commande manuelle (16) étant disposée à l'intérieur de ladite enceinte (22).

10. Porte palière comportant un afficheur numérique et un module de communication sans fil, ladite porte palière étant associée avec au moins une boîte aux lettres (20) selon la revendication 9 de sorte que lorsque ledit module de communication sans fil (14) est activé, le module de communication sans fil de ladite porte palière communique avec ledit module de communication sans fil (14) de ladite boîte aux lettres (20) pour mettre à jour une information sur ledit afficheur de ladite porte palière en accord avec lesdites informations dudit afficheur numérique (11) de ladite boîte aux lettres (20).
